(19) Europäisches Patentamt
European Patent Office
Office européen des brevets

(11) **EP 3 212 008 B1**

(12) **EUROPÄISCHE PATENTSCHRIFT**

(45) Veröffentlichungstag und Bekanntmachung des Hinweises auf die Patenterteilung:
**26.12.2018  Patentblatt 2018/52**

(21) Anmeldenummer: **15788002.2**

(22) Anmeldetag: **29.10.2015**

(51) Int Cl.:
***A23L 2/44*** *(2006.01)*

(86) Internationale Anmeldenummer:
**PCT/EP2015/075166**

(87) Internationale Veröffentlichungsnummer:
**WO 2016/066764 (06.05.2016 Gazette 2016/18)**

(54) **VERFAHREN ZUR ENTKEIMUNG VON MIT ESSIGSÄUREBAKTERIEN BELASTETEN GETRÄNKEN DURCH METALLKOMPLEXBILDENDE VERBINDUNGEN**

METHOD FOR THE DISINFECTION OF DRINKS CONTAMINATED WITH ACETIC ACID BACTERIA WITH COMPOUNDS THAT FORM METAL COMPLEXES

PROCÉDÉ DE DÉSINFECTION DE BOISSONS CHARGÉES DE BACTÉRIES D'ACIDE ACÉTIQUE PAR LIAISONS FORMANT DES COMPLEXES MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2014   EP 14191150**

(43) Veröffentlichungstag der Anmeldung:
**06.09.2017   Patentblatt 2017/36**

(73) Patentinhaber: **Lanxess Deutschland GmbH**
**50569 Köln (DE)**

(72) Erfinder: **TAUPP, Marcus**
**41539 Dormagen (DE)**

(56) Entgegenhaltungen:
**EP-A1- 2 241 200     WO-A1-2010/062548**

• **I Horsáková ET AL: "Asaia sp. as a Bacterium Decaying the Packaged Still Fruit Beverages", Special Issue Czech J. Food Sci, 1. Januar 2009 (2009-01-01), XP055158546, Gefunden im Internet: URL:http://www.agriculturejournals.cz/publicFiles/07951.pdf [gefunden am 2014-12-15]**

Bemerkungen:
Die Akte enthält technische Angaben, die nach dem Eingang der Anmeldung eingereicht wurden und die nicht in dieser Patentschrift enthalten sind.

EP 3 212 008 B1

**Beschreibung**

Die Erfindung betrifft ein Verfahren und die Verwendung von Metalkomplexbildnern und Dimethyldicarbonat zur Entkeimung und anschließender Konservierung von Getränken, die durch Essigsäurebakterien verunreinigt sind.

Aufgrund zahlreicher Nährstoffe und verschiedener Möglichkeiten eines mikrobiellen Eintrags während der Produktion können Getränke leicht durch Mikroorganismen kontaminiert werden, was letztlich zu Verderb und Unbrauchbarkeit des Produkts führt, Des Weiteren stellt eine mikrobielle Kontamination von Getränken ein Gesundheitsrisiko für den Anwender dar. Durch die Verwendung von chemischen Konservierungsstoffen wird ein Überleben oder ein Wachstum von Mikroorganismen in den Getränken verhindert, Aufgrund eines weltweit ansteigenden Warenverkehrs machen sich in Getränken vermehrt Keime bemerkbar, die dem Getränkehersteller bisher nicht bekannt waren. Insbesondere bei Essigsäurebakterien hat sich gezeigt, dass Konservierungsmittel nicht ausreichend stark genug sind und somit sehr hohe Konzentrationen eingesetzt werden, um zu verhindern, dass diese Bakterien sich vermehren können und somit das Getränk entsprechend kontaminieren (Horsakova, I., et al., Asaia sp. as a bacterium decaying the packaged still fruit beverages., Czech. Journal of Food Science, 27, 362-365, 2009). Der Einsatz von hohen Konzentrationen an Konservierungsmitteln ist aber aus ökonomischer Sicht unerwünscht und durch gesetzliche Regelungen limitiert.

Aus der EP 2241200 A1 ist ein Verfahren zur Einarbeitung von Dialkyldicarbonaten in Getränken bei einer Temperatur von 0°C bis 35°C und deren anschließende stufenweise Temperierung auf 20°C bis 40°C bekannt.

In der WO 2010/062548 A1 wurden Mischungen aus trans-Zimtsäure, Lauroylethylarginat, Dimethyldicarbonat (DMDC), Ethylendiamintetraessigsäure (EDTA) und Natriumhexametaphosphat (SHMP) in Getränken eingesetzt, um Getränke zu Entkeimen und zu Konservieren. Die WO2010/062548 enthält aber keinen Hinweis auf die synergistische Wirkung von DMDC und einem Metallkomplexbildner aus der Gruppe EDTA oder SHMP gegen Essigsäurebakterien, ohne das diesem Getränk Lauroylethylarginat und/oder trans-Zimtsäure zugesetzt wird oder in diesem Getränk enthalten ist.

Es bestand daher weiterhin das Bedürfnis nach einem Verfahren zur Entkeimung von Getränken bei dem Essigsäurebakterien effizient entfernt werden und die Nachteile des Standes der Technik überwunden werden.

Es wurde überraschend gefunden, dass bei Verwendung von DMDC und mindestens einem Metalkomplexbildner Essigsäurebakterien effizient in Getränken bekämpft werden können.

Gegenstand der Erfindung ist daher die Verwendung von Dimethyldicarbonat (DMDC) und zyklischen Polyphosphaten zur Entkeimung von Getränken, die durch Essigsäurebakterien verunreinigt sind, vorzugsweise zu deren anschließenden Konservierung, in Abwesenheit von Lauroylethylarginat und trans-Zimtsäure.

Bevorzugt sind Polyphosphate im Sinne der Erfindung zyklische Polyphosphate mit der allgemeinen Formel (I)

$$M_{n+2}P_nO_{3n+1} \qquad (I),$$

wobei n = 1 bis 100 ist und M ein einwertiges Metallkation ist oder zyklische Polyphosphate mit einwertigen und zweiwertigen Metallkationen. Bevorzugt sind die Metallkationen im Sinne der Erfindung Alkali- oder Erdalkalimetallkationen. Bevorzugt ist n = 5 bis 20. Besonders bevorzugt ist n = 15 bis 20. Ganz besonders bevorzugt sind Polyphosphate im Sinne der Erfindung zyklische Polyphosphate mit der allgemeinen Formel $M_{n+2}P_nO_{3n+1}$ (I) wobei n = 15 bis 20 sind und M = Natrium.

Besonders bevorzugt stellen Polyphosphate im Sinne der Erfindung Natriumhexametaphosphat, Kaliumhexametaphosphat Natriumcalciumhexametaphosphat, oder Calciumhexamethaphosphat oder Gemische dieser Verbindungen dar. Ganz besonders bevorzugt sind Polyphosphate im Sinne der Erfindung Natriumhexametaphosphat (SHMP).

Bakterien aus der Familie der Essigsäurebakterien sind im Allgemeinen Gram-negative, aerobe Stäbchen und dem Fachmann bekannt. Der Typ-Stamm dieser Bakterien ist *Acetobacter aceti* und mittlerweile sind vor allem im Bereich *Asaia sp.* neue Bakterien der Familie der Essigsäurenbakterien zugeordnet worden. Bevorzugt werden von der Mischung Essigsäurebakterien ausgewählt aus der folgende Gruppe Asaia sp., Acetobacter sp. Gluconobacter sp., Gluconacetobacter sp., Saccharibacter sp., Swaminanthia sp., Acidomonas sp., Kozakia sp., Neoasaia sp., Granulibacter sp., Acidocella sp., Acidiphilium sp., Roseococcus sp., Acidosphaera sp., Rhodopila sp. aus den Getränken entfernt. Besonders bevorzugt wirkt die Mischung gegen Asaia bogorensis, Asaia lannaensis, Gluconobacter oxydans und Gluconacetobacter liquefaciens.

Unter Getränken werden vorzugsweise Erfrischungsgetränke, wie z.B. und vorzugsweise Softdrinks, Fruchtsäfte und fruchtsafthaltige Getränke, aromatisierte Erfrischungsgetränke verstanden wie Limonaden, Tee (sogenannte ready-to-drink-Teegetränke), wie z.B. und vorzugsweise Eistee, Mischgetränke eines Tee/fruchtsafthaltigen Erfrischungsgetränkes, aber auch entsprechende Konzentrate, sowie Weincooler und entalkoholisierte Weine. Besonders bevorzugt sind die Getränke Eistees.

Dimethyldicarbonat wird im Allgemeinen in einer Menge von 50 ppm bis 1000 ppm bezogen auf die Menge des zu entkeimenden Getränkes eingesetzt, kann aber auch in kleineren oder größeren Mengen eingesetzt werden. Bevorzugt liegt die Menge an eingesetztem Dimethyldicarbonat zwischen 75 ppm bis 250 ppm bezogen auf die Menge des zu entkeimenden Getränkes.

Polyphosphate werden im Allgemeinen in einer Menge von 100 bis 5000 ppm bezogen auf die Menge des zu entkeimenden Getränkes eingesetzt, können aber auch in kleineren oder größeren Mengen eingesetzt werden. Bevorzugt liegt die Menge an eingesetztem Polyphosphat zwischen 250 bis 2000 ppm bezogen auf die Menge des zu entkeimenden Getränkes. Ganz besonders bevorzugt liegt die Menge an eingesetztem Polyphosphat zwischen 100 und 400 ppm bezogen auf die Menge des zu entkeimenden Getränkes.

Unter Verunreinigung durch Essigsäurebakterien wird erfindungsgemäß verstanden, dass die aus dem Stand der Technik dem Fachmann bekannten Nachweismethoden, wie z.B. ein Nachweis der Essigsäurebakterien mit Hilfe des bekannten Plattengussverfahrens mit Orangenserum-Agar nach Inkubation bei 28 °C für 3 - 7 Tage, einen Nachweis von Essigsäurebakterien in den Getränken ergeben. Der gemäß dieser Methoden durchgeführte Nachweis eines Bakteriums stellt schon eine Verunreinigung im Sinne der Erfindung dar.

Da die erfindungsgemäße Verwendung ebenfalls die Einarbeitung der Verbindungen in die zu entkeimenden Getränke betrifft, ist von der Erfindung ebenfalls ein Verfahren zur Entkeimung von Getränken, die durch Essigsäurebakterien verunreinigt sind, umfasst, bei dem

a) Dimethyldicarbonat und

b) zyklischen Polyphosphaten, in die Getränke eingearbeitet werden, in Abwesenheit von Lauroylethylarginat und trans-Zimtsäure.

Die Einarbeitung kann z.B. durch separate Zugabe der Verbindungen a) und b) in beliebiger Reihenfolge oder durch Zugabe dieser Verbindungen in einer Mischung erfolgen. Diese Mischung kann durch weitere Lösungsmittel oder auch durch andere Zusätze, wie z.B. Emulgatoren oder anderen geeigneten Lebensmittelzusatzstoffen verdünnt werden. Als Lösungsmittel können hydrophile, organische und mit Wasser mischbare Lösungsmittel eingesetzt werden. Bevorzugt wird kein zusätzliches Lösungsmittel hinzugegeben. Bevorzugt werden die Verbindungen getrennt in die Getränke eingearbeitet.

Nach der Entkeimung der Getränke findet vorzugsweise eine Konservierung durch die zugegebenen Konservierungsmittel statt.

DMDC und die ausgewählten Metalkomplexbildner wirken in synergistischer Weise gegen Essigsäurebakterien. Hierdurch können Getränke effizient und kostengünstig entkeimt und konserviert werden.

Zudem kann auf den Zusatz von Lauroylethylarginat und trans-Zimtsäure verzichtet werden und trotzdem eine gute konservierende Wirkung gegen Essigsäurebakterien in Getränken erzielt werden. Diese Vorgehensweise ist nicht nur aus ökonomischer Sicht begünstigt, sondern führt auch zur Reduktion der Gesamtmenge an Konservierungsmitteln in Getränken.

## Beispiele

## Beispiel 1

Ein Getränk wurde mit einer bestimmten Menge an einer Mikroorganismen-Mischung kontaminiert und eine Kombination aus Konservierungsmitteln wurde im Vergleich zu den Einzelsubstanzen auf Wirksamkeit hin untersucht. Bei der Keim-Mischung handelt es sich um *Asaia bogorensis, Asaia lannaensis, Gluconobacter oxydans sowie Gluconacetobacter liquefaciens.* Nach einer Woche wurde ein Anteil des Getränks auf das Vorhandensein von Mikroorganismen untersucht.

| | |
|---|---|
| Einzel-Testsubstanzen: | Dimethyldicarbonat, Natriumhexametaphosphat (SHMP) |
| Testkeim: | Mischung aus unterschiedlichen Essigsäurebakterien isoliert aus Getränkeabfüllstraßen |
| Substrat: | nicht karbonisierte Limonade |
| Keimeinsaat pro mL Substrat: | 200 cfu/mL je Keim in der Mischung |

**Tabelle 1:**

| Wirkstoff-einzeln | MHK [ppm] nach einer Woche | |
|---|---|---|
| SHMP | 750 | |

(fortgesetzt)

| Wirkstoff-einzeln | MHK [ppm] nach einer Woche | |
|---|---|---|
| Dimethyldicarbonat | 300 | |
| Wirkstoff-Kombination | MHK [ppm] nach einer Woche | Synergistischer Index |
| SHMP Dimethyldicarbonat | 250 150 | SI= 0,83 |

**Beispiel 2** (Vergleichsbeispiel)

Ein Getränk wurde mit einer bestimmten Menge an einer Mikroorganismen-Mischung kontaminiert und eine Kombination aus Konservierungsmitteln wurde im Vergleich zu den Einzelsubstanzen auf Wirksamkeit hin untersucht. Bei der Keim-Mischung handelt es sich um *Asaia bogorensis, Asaia lannaensis, Gluconobacter oxydans sowie Gluconacetobacter liquefaciens.* Nach einer Woche wurde ein Anteil des Getränks auf das Vorhandensein von Mikroorganismen untersucht.

| | |
|---|---|
| Einzel-Testsubstanzen: | Dimethyldicarbonat, Calciumdinatrium-Ethylendiamintetraacetat (CaEDTA) |
| Testkeim: | Mischung aus unterschiedlichen Essigsäurebakterien isoliert aus Getränkeabfüllstraßen |
| Substrat: | nicht karbonisierter Eistee |
| Keimeinsaat pro mL Substrat: | 200 cfu/mL je Keim in der Mischung |

**Tabelle 2:**

| Wirkstoff-einzeln | MHK [ppm] nach einer Woche | |
|---|---|---|
| CaEDTA | 250 | |
| Dimethyldicarbonat | 350 | |
| Wirkstoff-Kombination | MHK [ppm[ nach einer Woche | Synergistischer Index |
| CaEDTA Dimethyldicarbonat | 25 175 | SI= 0,6 |

Nach der von Kull et al. (F.C. Kull, P.C. Eismann, H.D. Sylvestrowicz, R.L. Mayer, Applied Microbiology 9, 538 bis 541, 1961) beschriebenen Methode wurde der Synergismus ermittelt. Dabei gelten folgende Beziehungen:

$$QA/Qa + QB/Qb = SI$$

Qa = Konzentration von Substanz A, welche die MHK darstellt

Qb = Konzentration von Substanz B, welche die MHK darstellt

QA= Konzentration von Substanz A in der Konzentration von A/B/C, die das Mikrobenwachstum unterbindet

QB = Konzentration von Substanz B in der Konzentration von A/B/C, die das Mikrobenwachstum unterbindet

SI = Synergistischer Index

SI = 1 bedeutet Additivität

SI >1 bedeutet Antagonismus

SI<1 bedeutet Synergismus

**Beispiel** 3

Eine Getränk wurde mit einer bestimmten Menge an einer Mikroorganismen-Mischung kontaminiert und eine Mischung bestehend aus Polyphosphat und Dimethyldicarbonat wurde im Vergleich zu einer Mischung bestehend aus Polyphosphat, Natriumhexametaphosphat (SHMP), Dimethyldicarbonat, Ethylendiamintetraessigsäure (EDTA), Zimtsäure und Ethyllauroylarginat (LAE) auf antimikrobielle Wirksamkeit hin untersucht. Bei der Keim-Mischung handelt es sich um *Asaia bogorensis, Asaia lannaensis, Gluconobacter oxydans sowie Gluconacetobacter liquefaciens.* Nach einer Woche wurde ein Anteil des Getränks auf das Vorhandensein von Mikroorganismen untersucht.

| | |
|---|---|
| Testkeim: | Mischung aus unterschiedlichen Essigsäurebakterien isoliert aus Getränkeabfüllstraßen |
| Substrat: | nicht karbonisierte Limonade |
| Keimeinsaat pro mL Substrat: | 200 cfu/mL je Keim in der Mischung |

**Tabelle 1:**

| Wirkstoff-Mischung 1 | Wirkstoff-Konzentration | Ergebnis nach 1 Woche |
|---|---|---|
| SHMP | 250 mg/L | Kein mikrobielles Wachstum feststellbar |
| Dimethyldicarbonat | 150 mg/L | |
| **Wirkstoff-Mischung 2** | **MHK ppm nach einer Woche** | **Ergebnis nach 1 Woche** |
| SHMP | 750 mg/L | Kein mikrobielles Wachstum feststellbar |
| Dimethyldicarbonat | 175 mg/L | |
| EDTA | 30 mg/L | |
| Zimtsäure | 30 mg/L | |
| LAE | 7,5 mg/L | |

Als Ergebnis bleibt festzuhalten, dass auch ohne Verwendung von EDTA, Zimtsäure und LAE die Wirkstoffmischung 1 eine gleich gute Wirksamkeit wie die komplex zusammengesetzte Wirkstoff-Mischung 2 aufweist. Zusätzlich wurde die Einsatzmenge an Dimethyldicarbonat in Mischung 1 reduziert und die Einsatzmenge an Polyphosphat in Mischung 1 signifikant gegenüber Mischung 2 reduziert. Wirkstoff-Mischung 1 erlaubt somit den Getränke-Herstellern, ihre Getränke wirksam mit Mischung 1 gegen Essigsäurebakteriern zu stabilisieren. Desweiteren nimmt der Endkonsument gegenüber Mischung 2 mit der gefundenen Mischung 1 wesentlich weniger an Zusatzstoffen durch das Konsumieren von Getränken auf.

**Patentansprüche**

1.  Verwendung von Dimethyldicarbonat (DMDC) und zyklischen Polyphosphaten zur Entkeimung von Getränken, die durch Essigsäurebakterien verunreinigt sind, vorzugsweise zu deren anschließenden Konservierung, in Abwesenheit von Lauroylethylarginat und trans-Zimtsäure.

2.  Verwendung gemäß Anspruch 1, **dadurch gekennzeichnet, dass** als Polyphosphat zyklische Polyphosphate mit der allgemeinen Formel (I)

$$M_{n+2}P_nO_{3n+1} \qquad (I),$$

wobei n = 1 bis 100 ist und M ein einwertiges Metallkation ist.

3.  Verwendung gemäß Anspruch 1, **dadurch gekennzeichnet, dass** als Polyphosphat Natriumhexametaphosphat eingesetzt wird.

4.  Verwendung gemäß Anspruch 3, **dadurch gekennzeichnet, dass** n = 5 bis 20 ist.

**5.** Verwendung gemäß einem oder mehreren der Ansprüche 1 bis 4, **dadurch gekennzeichnet, dass** Polyphosphat in einer Menge von 50 ppm bis 5000 ppm eingesetzt werden, bezogen auf die Menge an zu behandelndem Getränk und das DMDC in einer Menge von 75 ppm und 250 ppm eingesetzt wird, bezogen auf die Menge an zu behandelndem Getränk.

**6.** Verwendung gemäß einem oder mehreren der Ansprüche 1 bis 5, **dadurch gekennzeichnet, dass** als Getränke Erfrischungsgetränke, wie insbesondere Eistees, Sportdrinks, Fruchtsäfte und fruchtsafthaltige Getränke behandelt werden.

**7.** Verwendung gemäß einem oder mehreren der Ansprüche 1 bis 6, **dadurch gekennzeichnet, dass** die Wirkung der Mischung gegen Essigsäurebakterien ausgewählt aus der folgende Gruppe Asaia bogorensis, Asaia lannaensis, Gluconobacter oxydans sowie Gluconacetobacter liquefaciens erfolgt.

**8.** Verfahren zur Entkeimung von Getränken, die durch Essigsäurebakterien verunreinigt sind, **dadurch gekennzeichnet, dass**

a) Dimethyldicarbonat und
b) zyklischen Polyphosphaten

in die Getränke eingearbeitet werden, in Abwesenheit von Lauroylethylarginat und trans-Zimtsäure.

**9.** Verfahren gemäß Anspruch 8, **dadurch gekennzeichnet, dass** nach der Entkeimung der Getränke eine Konservierung der Getränke durch die zugegebenen Konservierungsmittel stattfindet.

**Claims**

**1.** Use of dimethyl dicarbonate (DMDC) and cyclic polyphosphates for the sterilization of drinks which have been contaminated with acetic acid bacteria, preferably the subsequent preservation thereof, in the absence of lauroyl ethyl arginate and trans-cinnamic acid.

**2.** Use according to Claim 1, **characterized in that** as polyphosphate cyclic polyphosphates having the general formula (I)

$$M_{n+2}P_nO_{3n+1} \qquad (I),$$

where n = 1 to 100 and M is a monovalent metal cation.

**3.** Use according to Claim 1, **characterized in that** the polyphosphate used is sodium hexametaphosphate.

**4.** Use according to Claim 3, **characterized in that** n = 5 to 20.

**5.** Use according to one or more of Claims 1 to 4, **characterized in that** polyphosphate in an amount of 50 ppm to 5000 ppm are used, based on the amount of drink to be treated, and DMDC in an amount of 75 ppm and 250 ppm is used, based on the amount of drink to be treated.

**6.** Use according to one or more of Claims 1 to 5, **characterized in that** the drinks treated are refreshing drinks, such as in particular iced teas, sports drinks, fruit juices and fruit juice-containing drinks.

**7.** Use according to one or more of Claims 1 to 6, **characterized in that** the mixture has an effect on acetic acid bacteria selected from the following group of Asaia bogorensis, Asaia lannaensis, Gluconobacter oxydans and Gluconacetobacter liquefaciens.

**8.** Method for sterilizing drinks which have been contaminated by acetic acid bacteria, **characterized in that**

a) dimethyl dicarbonate and
b) cyclic polyphosphates

are incorporated in the drinks, in the absence of lauroyl ethyl arginate and trans-cinnamic acid.

9. Method according to Claim 8, **characterized in that** preservation of the drinks by the preservatives added occurs after the sterilization of the drinks.

**Revendications**

1. Utilisation de dicarbonate de diméthyle (DMDC) et de polyphosphates cycliques pour la désinfection de boissons qui sont contaminées par des bactéries acétiques, de préférence pour leur conservation ultérieure, en l'absence d'arginate de lauroyléthyle et d'acide trans-cinnamique.

2. Utilisation selon la revendication 1, **caractérisée en ce que** des polyphosphates cycliques de formule générale (I)

$$M_{n+2}P_nO_{3n+1} \qquad (I)$$

dans laquelle n = 1 à 100 et M est un cation de métal monovalent,
en tant que polyphosphate.

3. Utilisation selon la revendication 1, **caractérisée en ce que** de l'hexamétaphosphate de sodium est utilisé en tant que polyphosphate.

4. Utilisation selon la revendication 3, **caractérisée en ce que** n = 5 à 20.

5. Utilisation selon une ou plusieurs des revendications 1 à 4, **caractérisée en ce que** le polyphosphate sont utilisés en une quantité de 50 ppm à 5 000 ppm, par rapport à la quantité de boisson à traiter et le DMDC est utilisé en une quantité de 75 ppm à 250 ppm, par rapport à la quantité de boisson à traiter.

6. Utilisation selon une ou plusieurs des revendications 1 à 5, **caractérisée en ce que** des boissons rafraîchissantes, telles que notamment des thés glacés, des boissons de sport, des jus de fruits et des boissons contenant des jus de fruits, sont traitées en tant que boissons.

7. Utilisation selon une ou plusieurs des revendications 1 à 6, **caractérisée en ce que** l'effet du mélange a lieu contre des bactéries acétiques choisies dans le groupe suivant : Asaia bogorensis, Asaia lannaensis, Gluconobacter oxydans et Gluconacetobacter *liquefaciens.*

8. Procédé de désinfection de boissons qui sont contaminées par des bactéries acétiques, **caractérisé en ce que**

   a) du dicarbonate de diméthyle et
   b) des polyphosphates cycliques

   sont incorporés dans les boissons, en l'absence d'arginate de lauroyléthyle et d'acide trans-cinnamique.

9. Procédé selon la revendication 8, **caractérisé en ce qu'**une conservation des boissons par les conservateurs ajoutés a lieu après la désinfection des boissons,

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2241200 A1
- WO 2010062548 A1

- WO 2010062548 A

**In der Beschreibung aufgeführte Nicht-Patentliteratur**

- **HORSAKOVA, I. et al.** Asaia sp. as a bacterium decaying the packaged still fruit beverages. *Czech. Journal of Food Science,* 2009, vol. 27, 362-365

- **F.C. KULL ; P.C. EISMANN ; H.D. SYLVESTROWICZ ; R.L. MAYER.** *Applied Microbiology,* 1961, vol. 9, 538-541